# FASCICULE DE BREVET EUROPEEN

(11) **EP 2 031 809 B1**
(45) Date de publication et mention de la délivrance du brevet: **28.07.2010**
(21) Numéro de dépôt: 08162913.1
(22) Date de dépôt: 25.08.2008
(51) Int. Cl.: H04L 12/56

(54) **Procédé de traitement de flots dans un réseau de communication**
Verfahren zur Verarbeitung von Datenströmen in einem Kommunikationsnetz
Method for processing data streams in a telecommunication network

(30) Priorité: 31.08.2007 FR 0757305
(43) Date de publication de la demande: 04.03.2009
(73) Titulaire: FRANCE TELECOM, 75015 Paris (FR)
(72) Inventeur: Bonald, Thomas, 78960, VOISINS LE BRETONNEUX (FR); Muscariello, Luca, 75005, PARIS (FR)

(56) Documents cités:
- WO-A-2005/096546
- WO-A-2006/051465

## Description

L'invention concerne une technique de traitement de flots dans un réseau de communication.

On se place ici dans le domaine des communications à travers un réseau de communication par paquets.

De plus en plus de services sont déployés sur des accès à un réseau de communication par paquets, par exemple à Internet, qu'ils soient fixes ou mobiles. Ces services concernent par exemple les appels voix, des transferts de fichiers vidéos, des jeux, des services de type Web. Ils ont, par nature, des exigences de qualité de service différentes en termes de délai et de taux de perte de paquets.

L'IETF, pour "Internet Engineering Task Force", recommande la mise en oeuvre d'une technique nommée Diffserv, pour "Differentiated Services", pour différencier des flots de données relatifs à un service en fonction d'une qualité de service requise. Cette technique est spécifiée dans la RFC 2475 et permet de marquer explicitement les paquets d'un flot de données relatif à un service en fonction de la qualité de service requise. Les flots sont ainsi regroupés en différentes classes de service. A la réception d'un paquet, un équipement du réseau est apte à déterminer une classe de qualité de service et lors du traitement du paquet, à appliquer un traitement différencié en fonction de la classe de qualité de service déterminée. Certains flots peuvent ainsi faire l'objet d'un traitement prioritaire de la part de l'équipement du réseau. Etant donné que chaque paquet doit être marqué explicitement, cette technique est très difficile à mettre en oeuvre dans un réseau.

Le document WO2005/096546 propose une méthode dans laquelle des connexions ayant un niveau faible d'occupation dans un buffer d'entrée sont traitées en priorité.

Il existe donc un besoin d'une technique permettant de faciliter un traitement différencié des flots de données transitant en un point d'un réseau de communication.

L'invention répond à ce besoin en proposant un procédé de traitement de flots, des paquets de données appartenant à différents flots étant reçus par un dispositif d'un réseau de communication et mémorisés dans une file d'attente en vue de leur retransmission par le dispositif, comprenant :
- au moins une étape de sélection d'un flot, dans laquelle on sélectionne un flot parmi les flots ayant des paquets mémorisés dans la file d'attente en fonction d'un critère prédéterminé dépendant de l'espace mémoire alloué audit flot sélectionné dans la file d'attente ;
- une étape de traitement d'au moins un paquet de données du flot sélectionné, extrait de la file d'attente.

Le procédé de traitement de flots est remarquable en ce que :
- pour retransmettre un paquet de données, l'étape de sélection comprend la sélection d'un flot auquel le moins d'espace mémoire dans la file d'attente est alloué et l'étape de traitement comprend la retransmission dudit au moins un paquet du flot sélectionné; et
- lorsque l'espace mémoire disponible de la file d'attente ne permet pas de mémoriser un paquet reçu, l'étape de sélection comprend la sélection d'un flot auquel le plus d'espace mémoire dans la file d'attente est alloué et l'étape de traitement comprend la suppression d'un paquet de données du flot sélectionné de la file d'attente.

On soulignera d'emblée que, grâce à l'invention, on s'affranchit du marquage des paquets. L'invention tire parti de la constatation suivante. Des flots relatifs à un service de type temps réel sont régulés naturellement par l'émetteur du flot, notamment du fait d'un débit limité par l'émetteur. Ainsi, peu de paquets de données d'un tel flot se trouvent en attente dans une file d'attente d'un équipement du réseau en vue de leur retransmission. Par opposition, des flots relatifs à un service non temps réel, par exemple un service de transfert de données, ne sont pas régulés à l'émission et de nombreux paquets d'un tel flot peuvent se retrouver en attente dans cette file. On constate donc que l'espace mémoire alloué à des flots de type temps réel est de taille faible par rapport à celui alloué à des flots non temps réel. L'observation de l'espace mémoire alloué à un flot permet ainsi de différencier les flots et on peut alors appliquer à ces derniers un traitement différencié.

De plus, en utilisant les techniques de l'art antérieur, l'association entre un service et une classe de qualité de service est généralement figée ; or, l'apparition d'un nouveau service peut nécessiter de revoir ces associations, ce qui est complexe et n'est pas nécessaire avec le procédé selon l'invention.

Par ailleurs, un même flot peut comprendre différentes parties, ces différentes parties correspondant respectivement à différents services. Il peut s'agir par exemple, sur un même flot, d'une conversation téléphonique, nécessitant un traitement temps réel, suivie d'un transfert de fichiers destinés à un traitement différé par le récepteur. Ainsi, les différentes parties d'un tel flot peuvent faire l'objet de traitements distincts, contrairement aux techniques de l'art antérieur. Il est en effet possible de faire évoluer le traitement au cours du temps, notamment en fonction de la nature des différentes parties de ce flot.

Ainsi, on utilise un critère prédéterminé, dépendant de l'espace mémoire alloué à un flot dans une file d'attente, pour sélectionner un flot parmi la pluralité de flots ayant des paquets en attente de retransmission et pour traiter au moins un paquet de données du flot sélectionné en attente dans la file.

Il n'est donc pas nécessaire de marquer explicitement les paquets de données et d'interpréter ensuite des champs de l'entête du paquet afin de déterminer une classe de qualité de service associée au flot. Le traitement est donc plus simple à mettre en oeuvre et indépendant du support ou non d'une fonction de marquage explicite, requise par la technique DiffServ.

Le procédé de traitement de flots est mis en oeuvre dans un équipement du réseau de communication, apte à acheminer des paquets de données. Il peut s'agir par exemple d'un routeur en amont du DSLAM ou Multiplexeur de Ligne d'Abonné Numérique dans le réseau de collecte DSL, d'une passerelle résidentielle, d'un équipement de sortie d'un réseau local, ... Il est indépendant d'un sens de transmission des paquets de données.

En sélectionnant un flot auquel le moins d'espace mémoire est alloué dans la file d'attente, comparativement aux autres flots en attente dans la file, on détermine un flot nécessitant un traitement différencié. On traite un paquet de ce flot en retransmettant le paquet. Les flots de type temps réel, par nature plus sensibles aux délais et aux pertes de paquet, bénéficient ainsi d'un traitement prioritaire lors du traitement des paquets de la file d'attente.

Lorsque l'espace mémoire disponible de la file d'attente ne permet pas de mémoriser un paquet reçu, on détermine un flot auquel un espace mémoire important est alloué comparativement aux autres flots qui ont des paquets en attente. Le traitement différencié permet de libérer de l'espace mémoire, en supprimant un paquet d'un flot non prioritaire, afin de pouvoir disposer d'espace mémoire nécessaire à de nouveaux paquets reçus par le dispositif. Par exemple, les flots de transfert de données sont, de manière générale, plus tolérants aux délais et aux pertes de paquets, notamment en raison d'une protection mise en oeuvre dans des couches de niveau supérieur aux couches de niveau 2 et 3 du modèle de référence OSI.

En outre, on réitère l'étape de sélection d'un flot auquel le plus d'espace mémoire dans la file d'attente est alloué, tant que l'espace mémoire disponible de la file d'attente ne permet pas de mémoriser le paquet reçu.

En effet, dans le cas de paquets de longueur variable, l'espace mémoire rendu disponible par la suppression d'un paquet ne permet pas obligatoirement d'accepter le paquet reçu.

De plus, les étapes du procédé sont effectuées lors du traitement de paquets de données dans une couche de niveau 2 ou 3 du modèle de référence OSI.

Le traitement des flots peut être effectué dans différentes couches du modèle de référence OSI, et plus précisément les couches de niveau 2 et 3. Il s'agit de la couche MAC, pour "Medium Access Control", LLC, pour "Link Logical Control" ou IP, pour "Internet Protocol".

Dans un mode de réalisation, on applique les étapes du procédé sur les flots d'un utilisateur du réseau de communication, préalablement à un traitement des flots d'au moins un utilisateur du réseau selon un procédé d'ordonnancement équitable.

On effectue les différentes étapes du procédé pour traiter la file d'attente des flots d'un utilisateur, préalablement au traitement des flots de l'ensemble des utilisateurs. Ainsi, la gestion des priorités s'effectue au sein des flots d'un utilisateur donné. Un utilisateur qui n'a qu'un seul flot actif, de type transfert de données, n'est pas pénalisé lors du traitement de ses paquets de données.

L'invention concerne également un dispositif de traitement de flots dans un réseau de communication, des paquets de données appartenant à différents flots étant reçus et mémorisés dans une file d'attente en vue de leur retransmission par ledit dispositif, comprenant :
- des moyens de sélection d'un flot, agencés pour sélectionner un flot parmi les flots ayant des paquets mémorisés dans la file d'attente en fonction d'un critère dépendant de l'espace mémoire alloué audit flot sélectionné dans la file d'attente, le critère appartenant au groupe comprenant le plus d'espace mémoire dans la file d'attente et le moins d'espace mémoire dans la file d'attente ;
- des moyens de traitement d'au moins un paquet de données du flot sélectionné, agencés pour extraire un paquet de données de la file d'attente en fonction du flot sélectionné et, lorsque le critère est le moins d'espace mémoire dans la file d'attente, pour retransmettre ledit paquet de données.

L'invention concerne en outre un équipement d'un réseau de communication, comprenant un dispositif de traitement de flots tel que décrit ci-dessus.

L'invention concerne un programme pour un dispositif de traitement de flots, comprenant des instructions de code de programme destinées à commander l'exécution des étapes du procédé précédemment décrit, lorsque ledit programme est exécuté par ledit dispositif et un support d'enregistrement lisible par un dispositif de traitement de flots sur lequel est enregistré un programme pour un dispositif de traitement de flots.

L'invention sera mieux comprise à l'aide de la description suivante d'un mode de réalisation particulier du procédé de l'invention, en référence aux dessins annexés sur lesquels :
- la figure 1 représente un système de communication ;
- la figure 2 représente les étapes du procédé selon un mode particulier de réalisation de l'invention ;
- la figure 3 représente un dispositif de traitement de flots selon un mode particulier de l'invention.

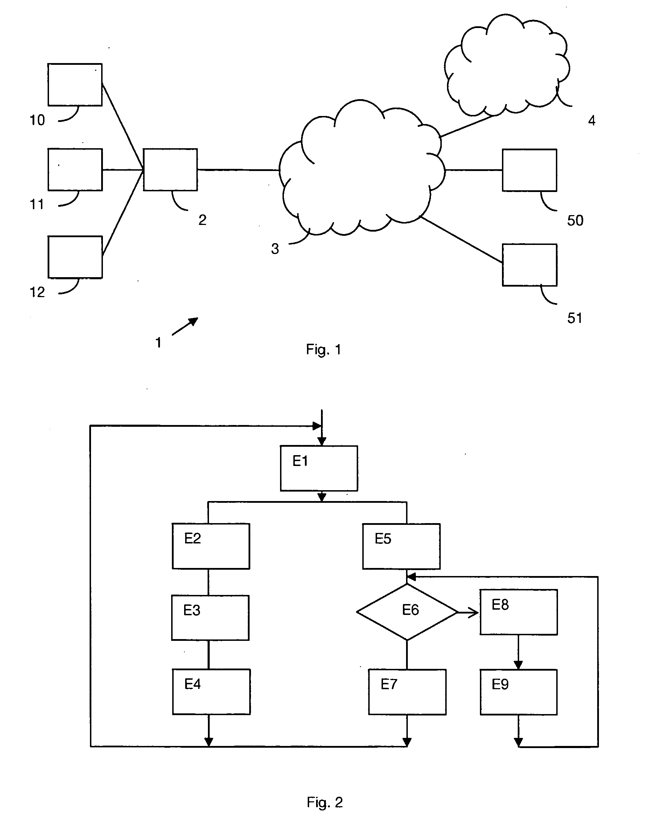

La figure 1 représente un système de communication 1 permettant à des utilisateurs d'accéder à différents services comme la téléphonie, la télévision, la vidéo à la demande, l'Internet. Chaque utilisateur est connecté au système par l'intermédiaire d'un équipement d'accès 10, 11, 12 du système de communication 1. L'équipement d'accès 10, 11, 12 peut être un routeur, une borne d'accès radio ou un modem et est connecté à un noeud de multiplexage 2. Ce noeud de multiplexage 2 peut être par exemple un routeur, un commutateur, une station de base. Ce noeud de multiplexage 2 est lui-même connecté à un réseau d'accès 3. Ce dernier permet aux utilisateurs d'accéder à l'Internet 4 ou à différents services par l'intermédiaire de serveurs ou de passerelles de service 50, 51.

Lorsqu'un utilisateur accède à un service particulier 4, 50, 51, des paquets de données sont échangés entre l'équipement d'accès de l'utilisateur 10, 11, 12 et un service, c'est-à-dire un équipement du réseau Internet 4 ou une passerelle de service 50, 51.

Par la suite, on appelle "flot" l'ensemble des paquets de données d'un utilisateur associés à une même instance d'application, par exemple une conversation téléphonique, la transmission d'un flux vidéo, le téléchargement d'un fichier, etc. A titre d'exemple non limitatif, un flot peut être identifié dans un réseau de type IP, pour "Internet Protocol", par le quintuplé adresse source, adresse destination, numéro de port source, numéro de port destination et protocole (TCP pour "Transmission Control Protocol" ou UDP pour "User Datagram Protocol"). Dans le cas du protocole IPv6, le flot peut simplement être identifié par le champ "Flow ID" prévu à cet effet. On notera que l'identification du flot s'effectue simplement par lecture des champs des entêtes de protocole. Par ailleurs, un même flot peut comprendre différentes parties, ces différentes parties n'ayant pas les mêmes exigences de qualité de service. Il peut s'agir par exemple sur un même flot, d'une conversation téléphonique, nécessitant un traitement temps réel, suivie d'un transfert de fichiers destinés à un traitement différé par le récepteur. Il peut s'agir également d'une navigation sur un site Web comprenant une partie interactive de consultation de pages, par nature sensible au délai et taux de perte des paquets, suivie d'une partie de transfert de fichiers, par nature plus tolérante au délai et aux pertes de paquets.

Les paquets de données sont acheminés par l'intermédiaire des différents équipements du système de communication : les équipements d'accès 10, 11, 12, les noeuds de multiplexage 2 et des routeurs du réseau d'accès 3.

Ces différents équipements traitent les paquets de données afin de les acheminer entre un équipement source et un équipement de destination. De façon connue, ces équipements reçoivent les paquets de données, les mémorisent dans une file d'attente et les transmettent en fonction de critères d'acheminement.

On se place maintenant à titre d'exemple dans le cas d'un acheminement de paquets de données dans un réseau de type IP. Un équipement contribuant à l'acheminement des données met en oeuvre les différentes couches du modèle de référence OSI, plus précisément les couches de niveau 2 et 3. Il s'agit de la couche MAC, pour "Medium Access Control", LLC, pour "Link Logical Control" ou IP, pour "Internet Protocol". Ces différentes couches mettent généralement en oeuvre des files d'attente pour les échanges entre elles. On se place ici au niveau d'une couche particulière. Les paquets de données reçus par cette couche en provenance d'une couche supérieure sont mémorisés dans une file d'attente et sont retransmis vers la couche inférieure en vue de leur traitement.

A titre d'exemple, on se place dans un mode particulier de réalisation où le procédé est mis en oeuvre au niveau de la couche LLC et notamment dans la gestion de la file d'attente des paquets de données de la couche supérieure IP vers la couche inférieure MAC.

Nous allons maintenant décrire le procédé de traitement de flots dans ce mode particulier de réalisation en relation avec la figure 2.

Dans une première étape E1 d'attente, le procédé attend un évènement.

Lors d'une étape E5, on reçoit un paquet de données à transmettre en provenance de la couche IP.

Dans une étape E6 de test de l'espace mémoire disponible, on vérifie si le paquet peut être mémorisé dans la file d'attente, c'est-à-dire si l'espace mémoire disponible de la file d'attente dépasse la taille du paquet reçu.

Si l'espace mémoire libre de la file d'attente est suffisant par rapport à la taille du paquet reçu, dans une étape E7, on détermine le flot auquel appartient le paquet de données à partir de l'entête du paquet de données, par exemple par le quintuplé {adresse source, adresse destination, numéro de port source, numéro de port destination et protocole}, et on mémorise le paquet dans la file d'attente. On met également à jour une information relative à l'espace mémoire alloué à ce flot. Le procédé repasse ensuite à l'étape E1 d'attente d'un évènement.

Si l'espace mémoire libre de la file d'attente n'est pas suffisant par rapport à la taille du paquet reçu, dans une première étape E8 de sélection d'un flot, on sélectionne un flot parmi les flots ayant des paquets mémorisés dans la file d'attente en fonction d'un critère prédéterminé dépendant de l'espace mémoire alloué audit flot sélectionné dans la file d'attente. Plus précisément, on sélectionne un flot auquel le plus d'espace mémoire dans la file d'attente est alloué.

Dans une première étape de traitement E9, on extrait un paquet du flot sélectionné et on le supprime de la file d'attente. L'information relative à l'espace mémoire alloué au flot sélectionné est mise à jour suite à la suppression du paquet.

Un flot auquel un espace mémoire important est alloué comparativement aux autres flots qui ont des paquets en attente est un flot non prioritaire. Le traitement différencié permet de libérer de l'espace mémoire, afin de pouvoir disposer d'espace mémoire nécessaire à un nouveau paquet reçu par le dispositif. Des flots non prioritaires tels que les flots de transfert de données sont plus tolérants aux délais et aux pertes de paquets, notamment en raison d'une protection mise en oeuvre dans des couches de niveau supérieur aux couches de niveau 2 et 3 du modèle de référence OSI. Ainsi, on supprime de la file d'attente au moins un paquet de données d'un flot non prioritaire, sans avoir au préalable marqué les paquets en fonction d'une classe de qualité de service. Dans un mode de fonctionnement courant de gestion de files d'attente, dans un tel cas de saturation, on ne traite pas le paquet reçu. Ce paquet supprimé est susceptible d'appartenir à un flot prioritaire.

Le procédé repasse ensuite à l'étape E6 de test de l'espace mémoire disponible. En effet, dans le cas de paquets de longueur variable, l'espace mémoire rendu disponible par la suppression d'un paquet ne permet pas obligatoirement d'accepter le paquet reçu.

Lors d'une étape E2, on détecte une requête en provenance de la couche MAC visant à obtenir un paquet de données à retransmettre.

Dans une deuxième étape E3 de sélection d'un flot, on sélectionne un flot parmi les flots ayant des paquets mémorisés dans la file d'attente en fonction d'un critère prédéterminé dépendant de l'espace mémoire alloué audit flot sélectionné dans la file d'attente. Plus précisément, on sélectionne un flot auquel le moins d'espace mémoire dans la file d'attente est alloué.

Dans une deuxième étape E4 de traitement, on extrait un paquet appartenant au flot sélectionné de la file d'attente et on le transmet à la couche MAC en vue de sa transmission vers sa destination.

Un flot auquel un espace mémoire peu important est alloué comparativement aux autres flots qui ont des paquets en attente est un flot prioritaire. Le traitement différencié permet de transmettre de façon prioritaire de tels flots. Les flots de type temps réel étant par nature plus sensibles aux délais et aux pertes de paquets bénéficient d'un traitement prioritaire lors du traitement des paquets de la file d'attente. Ainsi, on transmet en priorité au moins un paquet de données d'un flot prioritaire, sans avoir au préalable marqué les paquets en fonction d'une classe de qualité de service. Dans un mode de fonctionnement courant de gestion de files d'attente, dans un tel cas, on transmet un paquet de la file d'attente, par exemple, un paquet parmi les plus anciens dans la file. Ce paquet transmis peut appartenir à un flot non prioritaire, alors que des paquets susceptibles d'appartenir à des flots prioritaires restent dans la file d'attente.

Le procédé repasse ensuite à l'étape E1 d'attente d'un évènement.

On s'est placé ici dans le cas particulier de flots appartenant à un seul utilisateur. On peut également mettre en oeuvre le procédé, utilisateur par utilisateur, afin de traiter les flots de chaque utilisateur d'une pluralité d'utilisateurs, permettant de fournir un paquet de chaque utilisateur à un procédé d'ordonnancement équitable, tel que par exemple le procédé décrit dans l'article "Efficient fair queuing using deficit round robin" de M. Shreedhar et G. Varghese, ACM SIGCOMM Computer Communication Review, Octobre 1995.

La description du procédé a été faite dans un mode particulier de réalisation au niveau de la couche LLC. Le procédé peut également être mis en oeuvre au niveau de la couche IP, au niveau de la couche MAC ou dès qu'un équipement du réseau mémorise des paquets de données à acheminer dans une file d'attente.

Le procédé selon l'invention s'applique à tout type de flots, indépendamment du sens de transmission, des utilisateurs vers le réseau ou du réseau vers les utilisateurs.

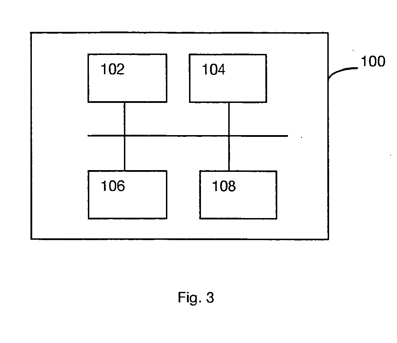

Nous allons maintenant décrire un dispositif de traitement de flots dans un mode particulier de réalisation de l'invention en référence à la figure 3.

Le dispositif 100 de traitement de flots dans un réseau de communication comprend:
- une zone mémoire 108, agencée pour mémoriser sous forme d'une file d'attente des paquets de données de flots ainsi qu'une information relative à l'espace mémoire occupé par chacun des flots, pour lequel des paquets de données sont mémorisés dans la zone mémoire 108 ;
- un module 102 de réception de flots de paquets de données et de mémorisation de ces derniers dans la file d'attente, en vue de leur retransmission ultérieure ;
- un module 104 de sélection d'un flot, agencé pour sélectionner un flot parmi les flots ayant des paquets mémorisés dans la file d'attente en fonction d'un critère prédéterminé dépendant de l'espace mémoire alloué audit flot sélectionné dans la file d'attente ;
- un module 106 de traitement d'au moins un paquet de données du flot sélectionné, extrait de la file d'attente.

Le module 104 est agencé pour sélectionner un flot auquel le moins d'espace mémoire dans la file d'attente est alloué ou pour sélectionner un flot auquel le plus d'espace mémoire dans la file d'attente est alloué parmi les flots pour lesquels des paquets de données sont mémorisés dans la zone mémoire 108.

Le module de traitement 106 est agencé pour supprimer un paquet de données de la file d'attente en fonction du flot sélectionné par le module 104 de sélection et pour transmettre, le cas échéant, le paquet à une couche inférieure.

Les modules 102, 104 et 106 sont agencés pour mettre en oeuvre le procédé précédemment décrit. Il s'agit de préférence de modules logiciels comprenant des instructions logicielles pour faire exécuter les étapes du procédé précédemment décrit, mises en oeuvre par le dispositif de traitement de flots. L'invention concerne donc aussi :
- un programme pour un dispositif de traitement de flots, comprenant des instructions de code de programme destinées à commander l'exécution des étapes du procédé précédemment décrit, lorsque ledit programme est exécuté par ledit dispositif ;
- un support d'enregistrement lisible par un dispositif de traitement de flots sur lequel est enregistré le programme pour un dispositif de traitement de flots.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

Le dispositif 100 de traitement de flots peut être intégré dans une entité du réseau de communication. Il peut s'agir de l'équipement d'accès 10, 11, 12, du noeud de multiplexage 2, d'un routeur du réseau d'accès 3, ....

## Revendications

1. Procédé de traitement de flots, des paquets de données appartenant à différents flots étant reçus par un dispositif (2, 10-12) d'un réseau de communication et mémorisés dans une file d'attente (108) en vue de leur retransmission par le dispositif, comprenant :
pour retransmettre un paquet de données, une étape (E3) de sélection d'un flot, dans laquelle on sélectionne un flot auquel le moins d'espace mémoire dans la file d'attente est alloué et une étape (E4) de retransmission d'un paquet du flot sélectionné, extrait de la file d'attente,
ledit procédé étant **caractérisé en ce qu'**il comprend, lorsque l'espace mémoire disponible de la file d'attente ne permet pas de mémoriser un paquet reçu, une autre étape (E8) de sélection d'un flot, dans laquelle on sélectionne un flot auquel le plus d'espace mémoire dans la file d'attente est alloué et une étape (E9) de suppression d'un paquet de données du flot sélectionné de la file d'attente.

2. Procédé selon la revendication 1, dans lequel on réitère l'autre étape de sélection d'un flot, tant que l'espace mémoire disponible de la file d'attente ne permet pas de mémoriser le paquet reçu (E6).

3. Procédé selon l'une quelconque des revendications précédentes, dans lequel les étapes du procédé sont effectuées lors du traitement de paquets de données dans une couche de niveau 2 ou 3 du modèle de référence OSI.

4. Procédé selon l'une quelconque des revendications précédentes, dans lequel on applique les étapes du procédé sur les flots d'un utilisateur du réseau de communication, préalablement à un traitement des flots d'au moins un utilisateur du réseau selon un procédé d'ordonnancement équitable.

5. Dispositif (100) de traitement de flots dans un réseau de communication, des paquets de données appartenant à différents flots étant reçus et mémorisés dans une file d'attente (108) en vue de leur retransmission par ledit dispositif, comprenant :
- des moyens (104) de sélection d'un flot, agencés pour sélectionner un flot parmi les flots ayant des paquets mémorisés dans la file d'attente en fonction d'un critère dépendant de l'espace mémoire alloué audit flot sélectionné dans la file d'attente, le critère correspondant au moins d'espace mémoire dans la file d'attente ;
- des moyens (106) de traitement d'au moins un paquet de données du flot sélectionné, agencés pour extraire un paquet de données de la file d'attente en fonction du flot sélectionné et, lorsque le critère est le moins d'espace mémoire dans la file d'attente, pour retransmettre ledit paquet de données,
ledit dispositif étant **caractérisé en ce que** les moyens de sélection d'un flot sont en outre agencés pour sélectionner un flot en fonction du critère correspondant au plus d'espace mémoire dans la file d'attente lorsque l'espace mémoire disponible dans la file d'attente ne permet pas de mémoriser un paquet reçu.

6. Equipement (2, 10, 11, 12) d'un réseau de communication, comprenant un dispositif de traitement de flots selon la revendication 5.

7. Programme pour un dispositif de traitement de flots, comprenant des instructions de code de programme destinées à commander l'exécution des étapes du procédé selon l'une des revendications 1 à 4, lorsque ledit programme est exécuté par ledit dispositif.

8. Support d'enregistrement lisible par un dispositif de traitement de flots sur lequel est enregistré le programme selon la revendication 7.

## Claims

1. Method for processing data streams, data packets belonging to various data streams being received by a device (2, 10-12) of a communications network and stored in a queue (108) with a view to their re-transmission by the device, comprising:
in order to re-transmit a data packet, a step (E3) for selection of a data stream, in which a data stream is selected to which the least memory space in the queue is allocated and a step (E4) for re-transmission of a packet from the selected data stream, extracted from the queue,
said method being **characterized in that** it comprises,
when the memory space available in the queue does not allow a received packet to be stored, another step (E8) for selection of a data stream, in which a data stream is selected to which the most memory space in the queue is allocated and a step (E9) for eliminating a data packet of the selected data stream from the queue.

2. Method according to Claim 1, in which the other step for selection of a data stream is reiterated, for as long as the memory space in the queue does not allow the received packet to be stored (E6).

3. Method according to either of the preceding claims, in which the steps of the method are carried out during the processing of data packets within a layer of level 2 or 3 of the OSI reference model.

4. Method according to any one of the preceding claims, in which the steps of the method are applied to the data streams of a user of the communications network, prior to processing the data streams for at least one user of the network according to an equitable ordering procedure.

5. Device (100) for processing data streams in a communications network, data packets belonging to various data streams being received and stored in a queue (108) with a view to their re-transmission by said device, comprising:
- means (104) for selection of a data stream, designed for selecting a data stream from amongst the data streams having packets stored in the queue according to a criterion depending on the memory space allocated to said selected data stream in the queue, the criterion corresponding to the least memory space in the queue;
- means (106) for processing at least one data packet from the selected data stream, designed for extracting a data packet from the queue depending on the selected data stream and, when the criterion is the least memory space in the queue, for re-transmitting said data packet
said device being **characterized in that** the means for selecting a data stream are moreover designed to select a data stream as a function of the criterion corresponding to the most memory space in the queue when the memory space available in the queue does not allow the storage of a packet received.

6. Equipment (2, 10, 11, 12) of a communications network, comprising a device for processing data streams according to Claim 5.

7. Program for a device for processing data streams, comprising program code instructions designed to control the execution of the steps of the method according to one of Claims 1 to 4, when said program is executed by said device.

8. Storage medium readable by a device for processing data streams on which the program according to Claim 7 is recorded.

## Patentansprüche

1. Verfahren zur Verarbeitung von Datenflüssen, wobei zu verschiedenen Flüssen gehörende Datenpakete von einer Vorrichtung (2, 10-12) eines Kommunikationsnetzes empfangen und in einer Warteschlange (108) zum Zweck ihrer Weiterleitung durch die Vorrichtung gespeichert werden, das enthält:
zur Weiterleitung eines Datenpakets, einen Schritt (E3) der Auswahl eines Flusses, in dem ein Fluss ausgewählt wird, dem der geringste Speicherplatz in der Warteschlange zugewiesen ist, und einen Schritt (E4) der Weiterleitung eines Pakets des ausgewählten Flusses, das aus der Warteschlange entnommen wird,
wobei das Verfahren **dadurch gekennzeichnet ist,**
**dass** es, wenn der verfügbare Speicherplatz der Warteschlange es nicht erlaubt, ein empfangenes Paket zu speichern, einen weiteren Schritt (E8) der Auswahl eines Flusses, in dem ein Fluss ausgewählt wird, dem der größte Speicherplatz in der Warteschlange zugewiesen ist, und einen Schritt (E9) des Entfernens eines Datenpakets des ausgewählten Flusses aus der Warteschlange enthält.

2. Verfahren nach Anspruch 1, bei dem der weitere Schritt der Auswahl eines Flusses so lange wiederholt wird, wie der verfügbare Speicherplatz der Warteschlange es nicht erlaubt, das empfangene Paket zu speichern (E6).

3. Verfahren nach einem der vorhergehenden Ansprüche, bei dem die Schritte des Verfahrens bei der Verarbeitung von Datenpaketen in einer Schicht der Ebene 2 oder 3 des OSI-Bezugsmodells durchgeführt werden.

4. Verfahren nach einem der vorhergehenden Ansprüche, bei dem die Schritte des Verfahrens an die Flüsse eines Benutzers des Kommunikationsnetzes vor einer Verarbeitung der Flüsse mindestens eines Benutzers des Netzes gemäß einem angemessenen Zeitablaufsteuerungsverfahren angewendet werden.

5. Vorrichtung (100) zur Verarbeitung von Datenflüssen in einem Kommunikationsnetz, wobei zu verschiedenen Flüssen gehörende Datenpakete empfangen und in einer Warteschlange (108) zum Zweck ihrer Weiterleitung durch die Vorrichtung gespeichert werden, die enthält:
- Einrichtungen (104) zur Auswahl eines Flusses, die eingerichtet sind, um unter den Flüssen, die in der Warteschlange gespeicherte Pakete haben, einen Fluss in Abhängigkeit von einem Kriterium auszuwählen, das von dem dem ausgewählten Fluss in der Warteschlange zugewiesenen Speicherplatz abhängt, wobei das Kriterium dem geringsten Speicherplatz in der Warteschlange entspricht;
- Einrichtungen (106) zur Verarbeitung mindestens eines Datenpakets des ausgewählten Flusses, die eingerichtet sind, um ein Datenpaket aus der Warteschlange in Abhängigkeit von dem ausgewählten Fluss zu entnehmen und, wenn das Kriterium der geringste Speicherplatz in der Warteschlange ist, um das Datenpaket weiterzuleiten,
wobei die Vorrichtung **dadurch gekennzeichnet ist, dass** die Einrichtungen zur Auswahl eines Flusses außerdem eingerichtet sind, um einen Fluss in Abhängigkeit von einem Kriterium auszuwählen, das dem meisten verfügbaren Speicherplatz in der Warteschlange entspricht, wenn der in der Warteschlange verfügbare Speicherplatz es nicht erlaubt, ein empfangenes Paket zu speichern.

6. Ausrüstung (2, 10, 11, 12) eines Kommunikationsnetzes, die eine Vorrichtung zur Datenflussverarbeitung nach Anspruch 5 enthält.

7. Programm für eine Vorrichtung zur Verarbeitung von Datenflüssen, das Programmcodeanweisungen enthält, die dazu bestimmt sind, die Ausführung der Schritte des Verfahrens nach einem der Ansprüche 1 bis 4 zu befehlen, wenn das Programm von der Vorrichtung ausgeführt wird.

8. Aufzeichnungsträger, der von einer Datenfluss-Verarbeitungsvorrichtung lesbar ist, auf dem das Programm nach Anspruch 7 gespeichert ist.
